# FASCICULE DE BREVET EUROPEEN

(11) **EP 1 186 809 B1**
(45) Date de publication et mention de la délivrance du brevet: **25.02.2004**
(21) Numéro de dépôt: 01402078.8
(22) Date de dépôt: 01.08.2001
(51) Int. Cl.: F16H 61/32, F16H 63/30

(54) **Boîte de vitesses à actionneur de passage**
Getriebe mit Schaltaktuator
Transmission with shift actuator

(30) Priorité: 08.09.2000 FR 0011448
(43) Date de publication de la demande: 13.03.2002
(73) Titulaire: Renault s.a.s., 92100 Boulogne Billancourt (FR)
(72) Inventeur: Raoul, Michel, 78990 Elancourt (FR)

(56) Documents cités:
- EP-A- 0 757 193
- FR-A- 2 754 956
- FR-A- 2 777 834
- US-A- 5 359 884

## Description

La présente invention concerne une boîte de vitesses mécanique, notamment pour véhicule automobile, comportant au moins un actionneur de passage capable de fournir l'énergie mécanique et la force nécessaires au passage de vitesses.

Plus précisément, cette invention a pour objet une boîte de vitesses mécanique à actionneur de passage, comprenant au moins un axe de passage de vitesses relié mécaniquement à une fourchette actionnant par l'intermédiaire d'un baladeur des moyens de synchronisation et de transmission de couple; une unité motrice capable de déplacer en rotation cet axe, et des moyens de couplage élastique entre l'unité motrice et celui-ci, constitués d'un premier flasque libre en rotation sur l'axe, d'un second flasque solidaire en rotation de ce dernier, et de ressorts d'accouplement élastique entre les deux flasques

Cette invention trouve une application privilégiée, mais non limitative, sur une boîte de vitesse « robotisée », dans laquelle tout ou partie des opérations de sélection et de passage des vitesses sont prises en charge par des systèmes d'actionnement électromécaniques placés sous le contrôle d'un calculateur.

Par la publication FR 2777 834, qui sert de base pour la présentation en deux parties de la revendication 1, on connaît un système d'actionnement électromécanique pour boîte de vitesses comportant une unité motrice associée d'une part à un système élastique d'emmagasinage de son énergie mécanique, apte à restituer cette énergie pour assurer sélectivement les dites commandes automatiques par l'intermédiaire d'une timonerie, respectivement de sélection et de passage, et d'autre part à un interrupteur de fin de course propre à provoquer l'apparition d'un signal représentatif, selon le cas, de l'état comprimé (emmagasinage d'énergie) dudit système élastique, de l'arrivée en butée de la dite unité motrice, ou du fait que la sélection ou l'engagement du rapport souhaité de la boîte a bien été obtenu.

Cette publication précise également que le système élastique, dont la précharge et la raideur sont connues, permet de mieux maîtriser les efforts de sélection, de même que les efforts de synchronisation lors du passage des vitesses, éventuellement en coopération avec un capteur de position de l'unité motrice à motoréducteur, celle-ci n'ayant pas à être asservie en effort, mais seulement en position, le système élastique uniformisant automatiquement les efforts demandés à l'unité motrice.

L'actionneur électromagnétique décrit dans la publication FR 2777 834, dispose donc d'un système d'accumulation d'énergie à détente rapide et à arrêt contrôlé, permettant d'assurer le passage des vitesses sans accroissement de la puissance délivrée par l'unité motrice, ni ralentissement de celle-ci.

Toutefois, un tel actionneur ne permet pas de contrôler en permanence l'effort appliqué au baladeur. En particulier, il n'est pas stable et irréversible dans toutes les positions du synchroniseur commandé par celui-ci. Il n'est donc pas capable d'assurer dans de bonnes conditions la commande d'un dispositif de synchronisation et de transmission de couple par simple adhérence (sans crabotage du pignon fou par le baladeur), tel que décrit dans la publication FR 2754 956.

Cette publication divulgue notamment un synchroniseur dans lequel chaque anneau de synchronisation transforme le couple reçu d'un moyeu en poussée axiale contre un pignon, de façon à transmettre lui-même le couple moteur à ce pignon en exerçant sur celui-ci une pression constante.

Un tel synchroniseur nécessite une commande très précise, et doit être stable et irréversible dans toutes les positions. Sa commande ne peut donc se satisfaire d'un actionneur électromagnétique connu, comme par exemple celui de la publication FR 2777 834.

La présente invention vise à contrôler à chaque instant la poussée exercée par une fourchette de boîte de vitesses sur des moyens de synchronisation et de transmission de couple.

Dans ce but, elle propose que les moyens de couplage élastiques entre au moins un axe passage de la boîte et son unité motrice, soient munis de moyens de repérage appropriés.

De préférence, la position neutre de la fourchette est donnée par un capteur de position axiale d'un flasque appartenant aux moyens de couplage.

La poussée de la fourchette peut par exemple être évaluée par un capteur de position angulaire relative de deux flasques, et le capteur de position neutre peut comporter un piston coopérant avec un cran d'un des deux flasques.

D'autres caractéristiques et avantages de la présente invention apparaîtront clairement à la lecture de la description suivante d'un mode de réalisation particulier de celle-ci, en liaison avec les dessins annexés sur lesquels :
- la figure 1 illustre un premier mode de réalisation de l'invention, et
- la figure 2 illustre un second mode de réalisation de celle-ci.

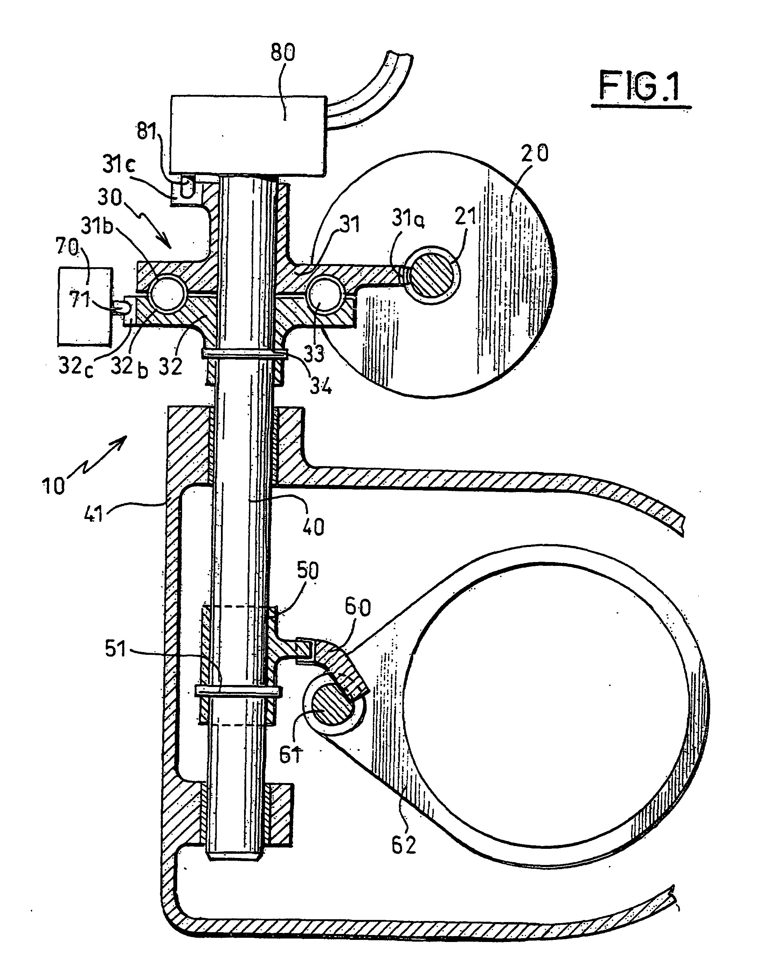

Le mécanisme 10 représenté sur la figure 1 comprend un source d'énergie 20, constituée d'un moteur électrique 20 associé à un réducteur. Le moteur 20 porte sur son axe un filet 21 constituant avec une roue dentée 31a un réducteur à vis sans fin. La roue dentée 31a est un secteur angulaire porté par un flasque d'entrée 31 du système d'accouplement élastique 30.

Le flasque 31, guidé par un axe 40 porté par le carter de boîte 41 est libre en rotation par rapport à cet axe. L'accouplement élastique entre le flasque d'entré 31 et un flasque de sortie 32 est réalisé par des ressorts 33 disposés dans des évidements 31b et 32b des deux flasques, et disposés en vis-à-vis. Le flasque de sortie 32, également guidé par l'axe 40, est lié en rotation à celui-ci par une goupille 34.

L'axe 40 est en partie à l'intérieur de la boîte et supporte un doigt 50, auquel il est lié en rotation par une goupille 51. En tournant et en coopérant avec le crabot 60, le doigt 50 assure le déplacement axial de l'axe 61 et de la fourchette 62 qui agit sur un baladeur non représenté.

Le positionnement angulaire précis en position neutre ou au repos du doigt de commande 50, et par conséquent de la fourchette 62, est déterminé par l'état électrique du contacteur, 70 dont un piston 71 coopère avec un cran 32c du flasque de sortie 32.

L'état de tension de l'accouplement élastique, et par conséquent la poussée axiale exercée par la fourchette, est déterminé par l'état électrique d'un capteur de position relative 80, porté par l'axe 40. Le capteur 80 est lié en rotation, d'une part à l'axe 40 par des cannelures ou tout autre moyen équivalent, et d'autre part au flasque d'entrée 31 par l'intermédiaire d'un curseur 81 coopérant avec une rainure 31c solidaire du flasque 31. L'écart de position angulaire relative des deux flasques 31, 32 est mesuré par le capteur, ou potentiomètre, 80 coopérant ces derniers

Conformément à l'invention, la boîte comporte donc des moyens de repérage du premier et du second flasque permettant de contrôler à chaque instant la poussée exercée par la fourchette sur les moyens de synchronisation et de transmission de couple.

Lorsque le système d'accouplement élastique tourne pour rattraper les jeux, le capteur de position relative 80 indique une absence de tension des ressorts, alors qu'un capteur de position neutre 70 indique que cette dernière a été quittée.

La position neutre de la fourchette est donc donnée par un capteur de position axiale 70 du deuxième flasque 32, tandis que la poussée de la fourchette est évaluée par un capteur de position angulaire relative 80 des deux flasques 31, 32.

Enfin, comme indiqué plus haut, le synchroniseur commandé par la fourchette 62 peut avantageusement être du type, à poussée axiale sans crabotage, dans lequel la synchronisation et la transmission de couple sont obtenues uniquement par adhérence de surfaces de friction.

Dans le mode de réalisation de l'invention illustré par la figure 1, le doigt de passage de vitesses 50 supporté par l'axe 40, transforme le mouvement de rotation de celui-ci en déplacement axial de la fourchette 62.

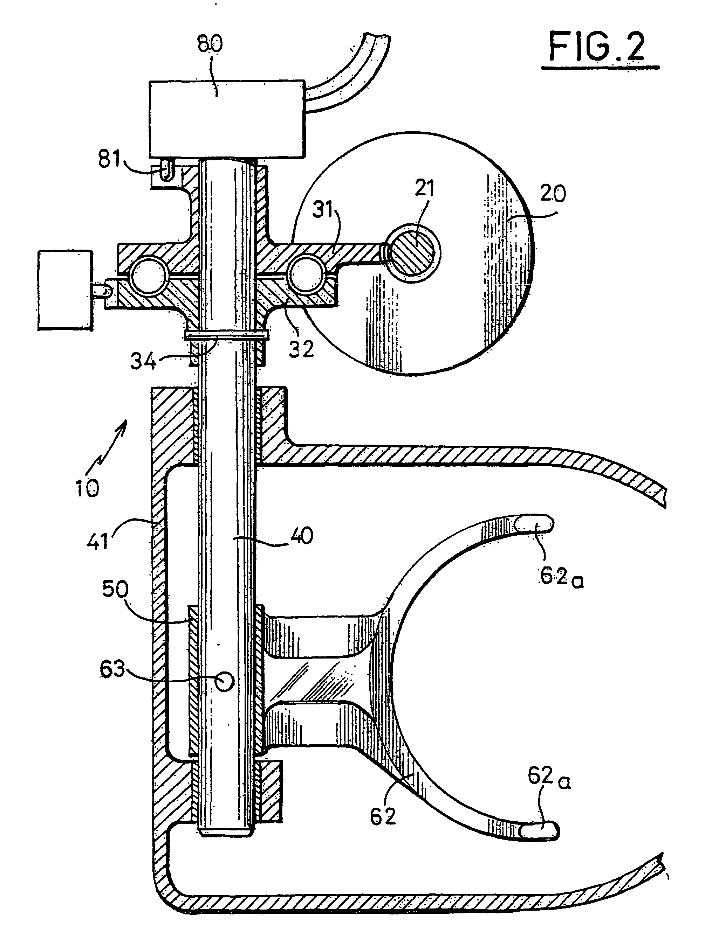

La figure 2 est une variante du mécanisme illustré par la figure 1, dans laquelle l'apport d'énergie par le moteur électrique 20, l'accouplement élastique, la détection de la position neutre, ainsi que la mesure de la tension des ressorts de l'accouplement élastique, sont assurés de façon analogue.

Toutefois, sur la figure 2, l'axe 40 supporte directement la fourchette 62 et déplace celle-ci en rotation. La mise en action d'anneaux de synchronisation (notamment à poussée axiale) nécessite en effet une course axiale très réduite du baladeur, et donc des patins 62a de la fourchette 62.

Il est donc possible d'assurer le déplacement du baladeur, non pas par un déplacement axial de la fourchette, mais par une rotation de cette dernière. Conformément à la figure 2, la fourchette 62 est alors portée par l'axe 40 et liée en rotation avec celui-ci par une goupille 63.

Comme indiqué plus haut, le fonctionnement des coupleurs coniques de synchronisation et de transmission de couple nécessite la connaissance permanente et précise de l'état de pression exercée par la fourchette sur ceux-ci, elle-même donnée par l'état de tension des ressorts de l'accouplement élastique entre les deux flasques.

Conformément à l'invention, cette information est donnée par un capteur mesurant l'écart angulaire entre les deux flasques du type, par exemple, potentiomètre. Ainsi, la pression optimale pour le confort de passage, puis pour la transmission du couple sans glissement par le coupleur, peut être garantie.

## Revendications

1. Boîte de vitesses mécanique à actionneur de passage, comprenant au moins un axe de passage de vitesses (40) relié mécaniquement à une fourchette (62) actionnant par l'intermédiaire d'un baladeur des moyens de synchronisation et de transmission de couple, une unité motrice (20) capable de déplacer en rotation l'axe (40), et des moyens de couplage élastique entre l'unité motrice et l'axe (40) constitués d'un premier flasque (31) libre en rotation sur l'axe (40), d'un second flasque (32) solidaire en rotation de celui-ci, et d'un ensemble de ressorts d'accouplement élastique (33) entre les deux flasques (31,32); **caractérisée en ce qu'**elle comporte des moyens de repérage (70, 71 ; 80, 81) du premier et du second flasque (31, 32) permettant de contrôler à chaque instant la poussée exercée par la fourchette (62) sur les moyens de synchronisation et de transmission de couple.

2. Boîte de vitesses selon la revendication 1, **caractérisée en ce que** la position neutre de la fourchette (62) est donnée par un capteur (70) de position angulaire du deuxième flasque (32).

3. Boîte de vitesses selon la revendication 1 ou 2, **caractérisée en ce que** la poussée de la fourchette (62) est évaluée par un capteur de position angulaire relative (80) du premier et du second flasque (31,32).

4. Boîte de vitesses selon la revendication 1, 2 ou 3, **caractérisée en ce que** le capteur de position neutre (70) comporte un piston (71) coopérant avec un cran (32c) du deuxième flasque (32).

5. Boîte de vitesses selon l'une des revendications 1 à 4, **caractérisée en ce que** le capteur de position relative (80) est un potentiomètre coopérant avec les deux flasques (31, 32) pour détecter leur écart de position angulaire relative

6. Boîte de vitesses selon l'une des revendications 1 à 5, **caractérisée en ce que** l'axe (40) supporte un doigt de passage de vitesses (50) transformant le mouvement de rotation de l'axe (40) en déplacement axial de la fourchette (62).

7. Boîte de vitesses selon l'une des revendications 1 à 5, **caractérisée en ce que** l'axe (40) supporte directement la fourchette (62) et déplace celle-ci en rotation.

8. Boîte de vitesses selon l'une des revendications précédentes, **caractérisée en ce que** l'unité motrice est constituée d'un moteur électrique (20) associé à un réducteur.

9. Boîte de vitesses selon la revendication 8, **caractérisée en ce que** le premier flasque (31) comporte une denture extérieure (31a) constituant un secteur de roue du système roue et vis sans fin, la vis (21) étant sur l'axe du moteur (20).

10. Boîte de vitesses selon l'une des revendications précédentes, **caractérisé en ce que** la synchronisation et la transmission de couple sont obtenues par adhérence de surfaces de friction.

## Claims

1. A mechanical gear box with a shift actuator, comprising at least one gear shift shaft (40) connected mechanically to a fork (62) actuating synchronisation and torque transmission means by means of a sliding gear, a drive unit (20) adapted to displace the shaft (40) in rotation, and elastic coupling means between the drive unit and the shaft (40) formed by a first flange (31) free in rotation on the shaft (40), a second flange (32) rigid in rotation therewith, and an assembly of elastic coupling springs (33) between the two flanges (31, 32), **characterised in that** it comprises location means (70, 71; 80, 81) of the first and second flanges (31, 32) making it possible to control at each instant the thrust exerted by the fork (62) on the synchronisation and torque transmission means.

2. A gear box as claimed in claim 1, **characterised in that** the neutral position of the fork (62) is provided by a sensor (70) of the angular position of the second flange (32).

3. A gear box as claimed in claim 1 or 2, **characterised in that** the thrust of the fork (62) is evaluated by a sensor (80) of the relative angular position of the first and second flanges (31, 32).

4. A gear box as claimed in claim 1, 2 or 3, **characterised in that** the neutral position sensor (70) comprises a piston (71) cooperating with a notch (32c) of the second flange (32).

5. A gear box as claimed in one of claims 1 to 4, **characterised in that** the relative position sensor (80) is a potentiometer cooperating with the two flanges (31, 32) to detect their relative angular position difference.

6. A gear box as claimed in one of claims 1 to 5, **characterised in that** the shaft (40) supports a gear shift finger (50) converting the rotary movement of the shaft (40) into an axial displacement of the fork (62).

7. A gear box as claimed in one of claims 1 to 5, **characterised in that** the shaft (40) directly supports the fork (62) and moves it in rotation.

8. A gear box as claimed in one of the preceding claims, **characterised in that** the drive unit is formed by an electric motor (20) associated with a reducing gear.

9. A gear box as claimed in claim 8, **characterised in that** the first flange (31) comprises external teeth (31a) forming a wheel sector of the wheel and endless screw system, the screw (21) being in the axis of the motor (20).

10. A gear box as claimed in one of the preceding claims, **characterised in that** the synchronisation and torque transmission are obtained by adherence of friction surfaces.

## Patentansprüche

1. Mechanisches Getriebe mit Schaltaktuator, welches mindestens eine Gangschaltachse (40) aufweist, die mechanisch mit einer Gabel (62) verbunden ist, wobei sie über eine Schiebewelle von Synchronisier- und Momentenübertragungsmitteln betätigt wird, eine Antriebseinheit (20), die fähig ist, die Achse (40) in Drehung zu verstellen, und elastische Kopplungsmittel zwischen der Antriebseinheit und der Achse (40), welche aus einem ersten Flansch (31) gebildet sind, welcher auf der Achse (40) frei in Drehung ist, einem zweiten Flansch (32), der fest in Drehung zu dieser ist, und einer elastischen Kupplungs-Federeinheit (33) zwischen den zwei Flanschen (31, 32),
**dadurch gekennzeichnet, dass**
es Ortungsmittel (70, 71; 80, 81) des ersten und des zweiten Flansches (31, 32) aufweist, welche es ermöglichen, in jedem Moment den Druck, welcher durch die Gabel (62) auf die Synchronisier- und Momentenübertragungsmittel ausgeübt wird, zu überwachen.

2. Getriebe nach Anspruch 1, **dadurch gekennzeichnet, dass** die neutrale Stellung der Gabel (62) durch einen Winkelstellungssensor (70) des zweiten Flansches (32) gegeben wird.

3. Getriebe nach Anspruch 1 oder 2, **dadurch gekennzeichnet, dass** der Druck der Gabel (62) durch einen relativen Winkelstellungssensor (80) des ersten und zweiten Flansches (31, 32) ausgewertet wird.

4. Gebtriebe nach Anspruch 1, 2 oder 3, **dadurch gekennzeichnet, dass** der Sensor (70) einer neutralen Stellung einen Kolben (71) aufweist, der mit einer Einkerbung (32c) des zweiten Flansches (32) zusammenwirkt.

5. Getriebe nach einem der Ansprüche 1 bis 4, **dadurch gekennzeichnet, dass** der relative Stellungssensor (80) ein Potentiometer ist, der mit den zwei Flanschen (31, 32) zusammenwirkt zum Detektieren ihrer relativen, winkelmäßigen Entfemungsstellung.

6. Getriebe nach einem der Ansprüche 1 bis 5, **dadurch gekennzeichnet, dass** die Achse (40) einen Gangschaltfinger (50) trägt, wobei er die Drehbewegung der Achse (40) unter einem axialen Verstellen der Gabel (62) transformiert.

7. Getriebe nach einem der Ansprüche 1 bis 5, **dadurch gekennzeichnet, dass** die Achse (40) direkt die Gabel (62) trägt und diese in Drehung verstellt.

8. Getriebe nach einem der vorherigen Ansprüche, **dadurch gekennzeichnet, dass** die Antriebseinheit aus einem elektrischen Motor (20) gebildet ist, welcher einem Untersetzungsgetriebe hinzugefügt ist

9. Getriebe nach Anspruch 8, **dadurch gekennzeichnet, dass** der erste Flansch (31) eine äußere Zahnung (31a) aufweist, wobei ein Radsektor eines Systems eines endlosen Schneckenrads gebildet wird, wobei sich die Schnecke (21) auf der Achse des Motors (20) befindet

10. Getriebe nach einem der vorherigen Ansprüche, **dadurch gekennzeichnet, dass** die Synchronisierung und die Momentenübertragung durch Haftreibung von Reiboberflächen erhalten wird.
